# EUROPEAN PATENT APPLICATION

(11) **EP 4 044 150 A1**
(43) Date of publication of application: **17.08.2022**
(21) Application number: 21213248.4
(22) Date of filing: 08.12.2021
(51) Int. Cl.: G08G 1/16, H04W 4/46

(54) **COLLISION AVOIDING ASSIST SYSTEM AND COLLISION AVOIDING ASSIST APPARATUS**

(30) Priority: 12.02.2021 JP 2021020458
(71) Applicant: TOYOTA JIDOSHA KABUSHIKI KAISHA, Toyota-shi Aichi 471-8571 (JP)
(72) Inventor: NAKAGAWA, Yuki, Toyota-shi, Aichi 471-8571 (JP); SUGIYAMA, Minako, Toyota-shi, Aichi 471-8571 (JP); HASEGAWA, Takashi, Toyota-shi, Aichi 471-8571 (JP)
(74) Representative: Cabinet Beau de Loménie

(57) **Abstract**

A collision avoiding assist system (100) avoids a collision of a first vehicle (201) and a second vehicle (202). The collision avoiding assist system includes a first collision avoiding assist apparatus (10) of the first vehicle and a second collision avoiding assist apparatus (10) of the second vehicle. The second collision avoiding assist apparatus transmits a second wireless signal when determining that the first and second vehicles are going to collide with each other, based on information, based on a first wireless signal transmitted from the first collision avoiding assist apparatus, and information from a surrounding information sensor apparatus (70) of the second vehicle. The first collision avoiding assist apparatus executes a collision avoiding process for the first vehicle (201) to avoid the collision of the first and second vehicles when the first collision avoiding assist apparatus receives the second wireless signal.

## Description

### BACKGROUND

### Field

The invention relates to a collision avoiding assist system and a collision avoiding assist apparatus.

### Description of the related art

There is known a technique that (i) an own vehicle acquires information on a target vehicle by a wireless communication or an inter-vehicle communication between the own vehicle and the target vehicle, and (ii) the acquired information on the target vehicle is utilized in a driving assist process for the own vehicle (for example, see JP 2015-97028 A).

Further, there is known a collision avoiding assist apparatus which is configured to execute a collision avoiding process of avoiding a collision of the own vehicle and another vehicle which are moving along different roads toward a traffic intersection at which the different roads cross (for example, see JP 2015-97028 A).

If the known collision avoiding assist apparatus cannot accurately determine a collision probability that the own vehicle and the target vehicle moving along the different roads toward the traffic intersection are going to collide with each other, a timing that an execution of the collision avoiding process is started in each vehicle, may be too late or too early. If the timing that the execution of the collision avoiding process is started in each vehicle, is too late, the collision of the vehicles may not be avoided. On the other hand, If the timing that the execution of the collision avoiding process is started in each vehicle, is too early, the collision avoiding process may be unnecessarily executed. Thus, in order to avoid an unnecessary execution of the collision avoiding process and avoid the collision of the vehicles, the collision probability should be accurately determined. To this end, information on a position and a moving speed of the own vehicle should be accurately acquired, and also a position and a moving speed of the target vehicle should be accurately acquired.

When a surrounding information sensor apparatus such as cameras and radar sensors are installed on the own vehicle, the information on the position and the moving speed of the target vehicle acquired by the surrounding information sensor apparatus, may be utilized to determine the collision probability. However, in a situation that the own vehicle and the target vehicle are moving along different roads toward the traffic intersection, it is difficult to accurately acquire the position information and the moving speed information of the target vehicle, based on in-vehicle sensor information provided from the surrounding information sensor apparatus of the own vehicle.

In this regard, there may be a measure of (i) acquiring the position information and the moving speed information of the target vehicle by the inter-vehicle communication with the target vehicle and (ii) determining the collision possibility, based on the acquired position information and the acquired the moving speed information of the target vehicle. However, in general, the inter-vehicle communication at least has a communication delay. Thus, a simultaneity of the information acquired by the inter-vehicle communication is low. In particular, values which are represented by inter-vehicle communication information acquired by the inter-vehicle communication, may not correspond to actual values of a point of time when the inter-vehicle communication information is acquired. Thus, the position information and the moving speed information of the target vehicle may not be accurately acquired, based on the inter-vehicle communication information acquired by the inter-vehicle communication with the target vehicle.

### SUMMARY

An object of the invention is to provide a collision avoiding assist system and a collision avoiding assist apparatus which can avoid the unnecessary execution of the collision avoiding assist process and the collision of the vehicles in the situation that the vehicles are moving along the different roads toward the traffic intersection.

A collision avoiding assist system of avoiding a collision of a first vehicle and a second vehicle according to the invention includes a first collision avoiding assist apparatus and a second collision avoiding assist apparatus. The first collision avoiding assist apparatus which is installed on the first vehicle and transmits wireless signals to an outside of the first vehicle. The second collision avoiding assist apparatus which is installed on the second vehicle and receives the wireless signals transmitted from the first collision avoiding assist apparatus to the outside and transmits wireless signals to an outside of the second vehicle.

The first collision avoiding assist apparatus is configured to transmit a first wireless signal to the outside of the first vehicle. The first wireless signal being a signal which represents (i) position information on a position of the first vehicle, (ii) moving speed information on a moving speed of the first vehicle, and (iii) identification information representing that the first wireless signal is a signal transmitted from the first collision avoiding assist apparatus.

The second collision avoiding assist apparatus is configured to acquire the position information of the first vehicle and the moving speed information of the first vehicle, based on the first wireless signal which the second collision avoiding assist apparatus receives. Further, the second collision avoiding assist apparatus is configured to transmit a second wireless signal when the second collision avoiding assist apparatus determines that the first vehicle and the second vehicle are going to collide with each other, based on (i) the acquired position information of the first vehicle, (ii) the acquired moving speed information of the first vehicle, (iii) position information on the position of the first vehicle which the second collision avoiding assist apparatus acquires by a surrounding information sensor apparatus installed on the second vehicle, and (iv) moving speed information on the moving speed of the first vehicle which the second collision avoiding assist apparatus acquires by the surrounding information sensor apparatus installed on the second vehicle. The second wireless signal being a signal which represents (i) collision information representing that the first vehicle and the second vehicle are going to collide with each other and (ii) identification information representing that the second wireless signal is a signal transmitted to the first vehicle.

The first collision avoiding assist apparatus is configured to execute a collision avoiding process for the first vehicle to avoid the collision of the first vehicle and the second vehicle when the first collision avoiding assist apparatus receives the second wireless signal.

With the collision avoiding assist system according to the invention, the second collision avoiding assist apparatus acquires the position information and the moving speed information of the first vehicle, based on the wireless signal transmitted from the first collision avoiding assist apparatus. In other words, the second collision avoiding assist apparatus acquires the position information and the moving speed information of the first vehicle, based on inter-vehicle communication information provided by the wireless signals from the first collision avoiding assist apparatus.

Further, the second collision avoiding assist apparatus acquires the position information and the moving speed information of the first vehicle from the surrounding information sensor apparatus of the second vehicle. On other words, the second collision avoiding assist apparatus acquires the position information and the moving speed information of the first vehicle, based on in-vehicle sensor information provided from the surrounding information sensor apparatus of the second vehicle.

Then, the second collision avoiding assist apparatus determines the collision probability that the first and second vehicles are going to collide with each other, based on a combination of the inter-vehicle communication information and the in-vehicle sensor information.

As described above, in order to accurately determine the collision probability that the own vehicle and the target vehicle moving along the different roads toward the intersection, are going to collide with each other, the position information and the moving speed information of the own vehicle should be accurately acquired, and also the position information and the moving speed information of the target vehicle should be accurately acquired. In other words, in order to accurately determine the collision probability that the first and second vehicles along the different road toward the traffic intersection, are going to collide with each other, the position information and the moving speed information of the first vehicle should be accurately acquired, and also the position information and the moving speed information of the second vehicle should be accurately acquired.

In general, regarding the simultaneity of the information that values represented by the acquired information correspond to the actual values of a point of time when the information is acquired, the simultaneity of the information acquired, based on the in-vehicle sensor information is higher than the simultaneity of the information acquired, based on the inter-vehicle communication information. Thus, the simultaneity of the position information and the moving speed information of the first vehicle acquired, based on the in-vehicle sensor information is higher than the simultaneity of the position information and the moving speed information of the first vehicle acquired, based on the inter-vehicle communication information.

In this regard, when the second vehicle is moving, following the first vehicle in the same direction, the second collision avoiding assist apparatus can accurately acquire the position information and the moving speed information of the first vehicle, based on the in-vehicle sensor information. When the first and second vehicles are moving along the different roads toward the traffic intersection, the second collision avoiding assist apparatus cannot accurately acquire the position information and the moving speed information of the first vehicle, based on the in-vehicle sensor information. Thus, acquiring the position information and the moving speed information of the first vehicle, based on the in-vehicle sensor information, has advantage of high simultaneity of the acquired position information and the acquired moving speed information, but has disadvantage of low accuracy of the acquired position information and the acquired moving speed information.

On the other hand, the inter-vehicle communication information is information which is transmitted from the first collision avoiding assist apparatus. Thus, the accuracy of the position information and the moving speed information of the first vehicle acquired, based on the inter-vehicle communication information, is high. However, as described above, the simultaneity of the position information and the moving speed information of the first vehicle acquired, based on the inter-vehicle communication information, is low. Thus, acquiring the position information and the moving speed information of the first vehicle, based on the inter-vehicle communication information, has advantage of high accuracy of the acquired position information and the acquired moving speed information, but has disadvantage of low simultaneity of the acquired position information and the acquired moving speed information.

Further, when the second vehicle is moving, following the first vehicle in the same direction, the second collision avoiding assist apparatus can constantly acquire the in-vehicle sensor information on the first vehicle. However, when the first and second vehicles are moving along the different roads toward the traffic intersection, the second collision avoiding assist apparatus may not acquire the in-vehicle sensor information due to a fact that the first vehicle in a blind area of the second vehicle. Acquiring the position information and the moving speed information of the first vehicle, based on the in-vehicle sensor information, also has such disadvantage.

On the other hand, even when the first vehicle is in the blind area of the second vehicle, and thus the second collision avoiding assist apparatus cannot acquire the in-vehicle sensor information on the first vehicle, the second collision avoiding assist apparatus can acquire the position information and the moving speed information of the first vehicle, based on the inter-vehicle communication information.

With the collision avoiding assist system according to the invention, the second collision avoiding assist apparatus determines the collision probability that the first and second vehicles are going to collide with each other, based on a combination of the inter-vehicle communication information and the in-vehicle sensor information. Thus, the disadvantage as to acquiring the position information and the moving speed information of the first vehicle, based on the inter-vehicle communication information and the disadvantage as to acquiring the position information and the moving speed information of the first vehicle, based on the in-vehicle sensor information complement each other. As a result, the collision probability can be accurately determined. Thus, the unnecessary execution of the collision avoiding process and the collision of the vehicles can be avoided in a situation that the vehicles are moving along the different roads toward the traffic intersection.

According to an aspect of the invention, the second collision avoiding assist apparatus may be configured to execute a collision avoiding process for the second vehicle to avoid the collision of the first vehicle and the second vehicle when the second collision avoiding assist apparatus determines that the first vehicle and the second vehicle are going to collide with each other.

With the collision avoiding assist system according to this aspect of the invention, the collision avoiding process is executed for the first vehicle, and also the collision avoiding process is executed for the second vehicle. Thus, the collision of the first and second vehicles can be surely avoided.

According to another aspect of the invention, the position information may be information acquired, based on a GPS signal.

The GPS signal provides the position information on the vehicle on a common coordinate system. Thus, the position information of the first vehicle can be accurately acquired by acquiring the position information of the first vehicle, based on the GPS signal.

According to further another aspect of the invention, the moving speed information may be information acquired, based on a GPS signal.

The GPS signal provides the moving speed information on the vehicle on the common coordinate system. Thus, the moving speed information of the first vehicle can be accurately acquired by acquiring the moving speed information of the first vehicle, based on the GPS signal.

According to further another aspect of the invention, the moving speed information may be a relative speed vector between the first vehicle and the second vehicle.

In order to accurately determine the probability that the vehicles moving along the different roads toward the traffic intersection are going to collide with each other, it is effective to utilize the relative speed vector between the vehicles. With the collision avoiding assist system according to this aspect of the invention, the relative speed between the first and second vehicles is utilized as the moving speed information. Thus, the collision probability of the first and second vehicles can be accurately determined.

According to further another aspect of the invention, the surrounding information sensor apparatus may be installed on the second vehicle so as to detect the position and the moving speed of the first vehicle in a predetermined angle area ahead of the second vehicle.

In a situation that two vehicle are moving along the different roads toward the traffic intersection, if a detecting angle range of the surrounding information sensor apparatus of each vehicle is limited to an angle range ahead of each vehicle, but the moving speeds of the vehicles are generally the same, the surrounding information sensor apparatuses of the vehicles start detecting each other. Thus, when the vehicles are going to collide with each other, the executions of the collision avoiding process are generally simultaneously started for the vehicles. Thus, the collision of the vehicle is avoided.

However, in a situation that (i) there is a traffic intersection at which a priority road and a non-priority road cross, (ii) one of the vehicles is moving along the priority road toward the traffic intersection, and (iii) the other vehicle is moving along the non-priority road toward the traffic intersection, the moving speed of the vehicle moving along the non-priority road is lower than the moving speed of the vehicle moving along the priority road. Thus, there is a situation that the moving speed of one of the vehicles is lower than the moving speed of the other vehicle. In such a situation, the surrounding information sensor apparatus of the vehicle having a higher moving speed (i.e., a high moving speed vehicle) detects the other vehicle (i.e., a low moving speed vehicle) before the surrounding information sensor apparatus of the low moving speed vehicle detects the high moving speed vehicle. Then, if the high and low moving speed vehicles are going to collide with each other, the collision avoiding assist apparatus of the high moving speed vehicle starts executing the collision avoiding process. On the other hand, the surrounding information sensor apparatus of the low moving speed vehicle does not detect the high moving speed vehicle. Thus, the collision avoiding assist apparatus of the low moving speed vehicle cannot determine the collision probability. Thus, even when the low moving speed vehicle is going to collide with the high moving speed vehicle, the collision avoiding assist apparatus of the low moving speed vehicle does not start executing the collision avoiding process. Thus, if a point where the surrounding information sensor apparatus of the high moving speed vehicle starts to detect the low moving speed vehicle, is near a point where the vehicles are going to collide with each other, only the execution of the collision avoiding process by the collision avoiding assist apparatus of the high moving speed vehicle may not avoid the collision of the high moving speed vehicle with the low moving speed vehicle.

In this regard, with the collision avoiding assist system according to this aspect of the invention, when the first vehicle is the low moving speed vehicle, and the second vehicle is the high moving speed vehicle, the second collision avoiding assist apparatus starts executing the collision avoiding process to avoid the collision of the second vehicle with the first vehicle along with transmitting the collision information on the collision of the first and second vehicles to the first collision avoiding assist apparatus. Then, the first collision avoiding assist apparatus starts executing the collision avoiding process for the first vehicle, based on the collision information transmitted from the second collision avoiding assist apparatus. Thus, even when the moving speed of the first vehicle is lower than the moving speed of the second vehicle, the collision of the first and second vehicles can be surely avoided.

Elements of the invention are not limited to elements of embodiments and modified examples of the invention described with reference to the drawings. The other objects, features and accompanied advantages of the invention can be easily understood from the embodiments and the modified examples of the invention.

### BRIEF DESCRIPTION OF THE DRAWINGS

FIG. 1 is a view which shows a collision avoiding assist system according to an embodiment of the invention.
FIG. 2 is a view which shows a scene that the collision avoiding assist system according to the embodiment of the invention functions.
FIG. 3 is a view which shows a collision avoiding assist apparatus of the collision avoiding assist system according to the embodiment of the invention.
FIG. 4 is a view which shows a flowchart of a routine executed by the collision avoiding assist apparatus of the collision avoiding assist system according to the embodiment of the invention.
FIG. 5 is a view which shows a flowchart of a routine executed by the collision avoiding assist apparatus of the collision avoiding assist system according to the embodiment of the invention.
FIG. 6 is a view which shows a flowchart of a routine executed by the collision avoiding assist apparatus of the collision avoiding assist system according to the embodiment of the invention.
FIG. 7A is a view which shows a specific scene that the collision avoiding assist system according to the embodiment of the invention functions when a vehicle is moving along a priority road toward a traffic intersection at which the priority road and a non-priority road, and another vehicle is moving along the non-priority road.
FIG. 7B is a view which shows a specific scene that the collision avoiding assist system according to the embodiment of the invention functions when the vehicles approaches the traffic intersection.

### DESCRIPTION OF THE EMBODIMENTS

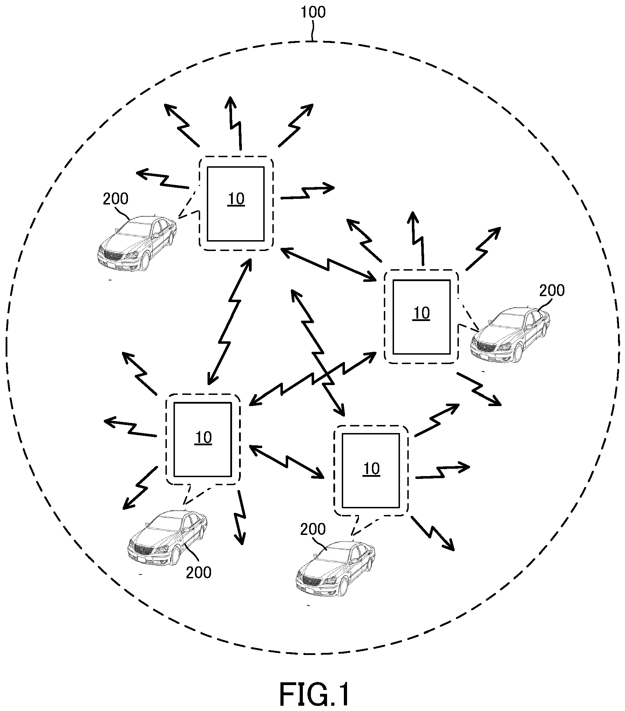

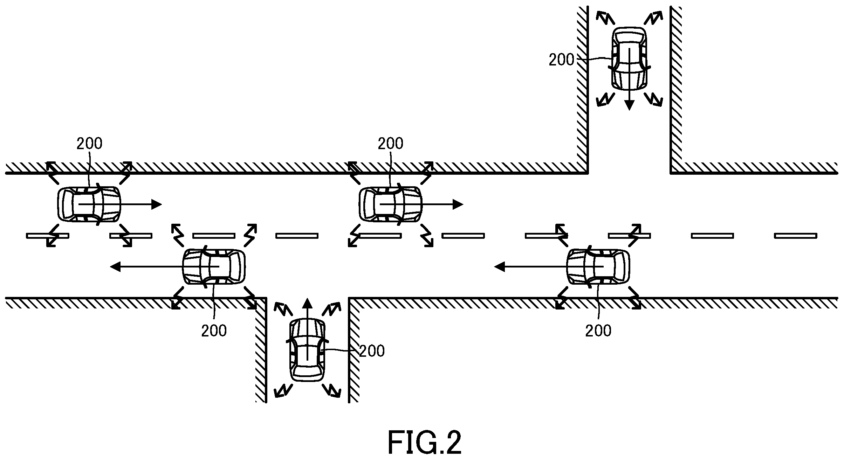

Below, a collision avoiding assist system according to an embodiment of the invention will be described with reference to the drawings. As shown in FIG. 1, the collision avoiding assist system 100 according to the embodiment of the invention includes collision avoiding assist apparatuses 10 installed on vehicles 200, respectively. The collision avoiding assist system 100 is a system which avoids a collision of the vehicles 200, utilizing wireless communication or inter-vehicle communication between the collision avoiding assist apparatuses 10. As shown in FIG. 2, the collision avoiding assist system 100 functions in a situation that two or more vehicles 200 are moving in an inter-vehicle communication area of the collision avoiding assist apparatuses 10.

### <ECU>

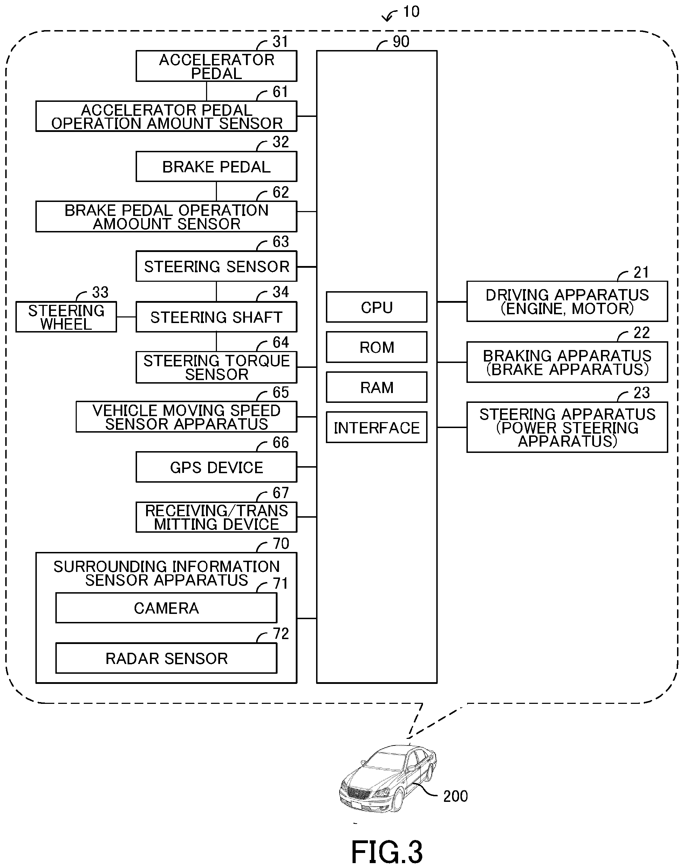

As shown in FIG. 3, the collision avoiding assist apparatus 10 includes an ECU 90. ECU stands for electronic control unit. The ECU 90 includes a micro-computer as a main component. The micro-computer includes a CPU, a ROM, a RAM, a non-volatile memory, and an interface. The CPU realizes various functions by executing instructions, or programs, or routines memorized in the ROM.

### <Driving Apparatus, etc.>

A driving apparatus 21, a braking apparatus 22, a steering apparatus 23 are installed on the vehicle 200.

### <Driving Apparatus>

The driving apparatus 21 is an apparatus which outputs a driving force to be applied to the vehicle 200 to move the vehicle 200. The driving apparatus 21 is, for example, an internal combustion engine and/or at least one electric motor. The driving apparatus 21 is electrically connected to the ECU 90. The ECU 90 can control the driving force output from the driving apparatus 21 by controlling activations of the driving apparatus 21.

### <Braking Apparatus>

The braking apparatus 22 is an apparatus which outputs a braking force to be applied to the vehicle 200 to brake the vehicle 200. The braking apparatus 22 is, for example, a brake apparatus. The braking apparatus 22 is electrically connected to the ECU 90. The ECU 90 can control the braking force output from the braking apparatus 22 by controlling activations of the braking apparatus 22.

### <Steering Apparatus>

The steering apparatus 23 is an apparatus which outputs a steering force to be applied to the vehicle 200 to steer the vehicle 200. The steering apparatus 23 is, for example, a power steering apparatus. The steering apparatus 23 is electrically connected to the ECU 90. The ECU 90 can control the steering force output from the steering apparatus 23 by controlling activations of the steering apparatus 23.

### <Sensors, etc.>

In addition, an accelerator pedal operation amount sensor 61, a brake pedal operation amount sensor 62, a steering angle sensor 63, a steering torque sensor 64, a vehicle moving speed sensor apparatus 65, a GPS device 66, a receiving/transmitting device 67, and a surrounding information sensor apparatus 70.

### <Accelerator Pedal Operation Amount Sensor>

The accelerator pedal operation amount sensor 61 is electrically connected to the ECU 90. The accelerator pedal operation amount sensor 61 detects an operation amount of an accelerator pedal 31 and sends information on the detected operation amount to the ECU 90. The ECU 90 acquires the operation amount of the accelerator pedal 31 as an accelerator pedal operation amount AP, based on the information sent from the accelerator pedal operation amount sensor 61. The ECU 90 acquires a requested driving force by calculation, based on the accelerator pedal operation amount AP and a moving speed of the own vehicle 200. The requested driving force is a driving force which is requested to be output from the driving apparatus 21. The ECU 90 controls the activations of the driving apparatus 21 so as to output the driving force which corresponds to the requested driving force from the driving apparatus 21 when the ECU 90 is executing a normal driving process other than a collision avoiding process described later.

### <Brake Pedal Operation Amount Sensor>

The brake pedal operation amount sensor 62 is electrically connected to the ECU 90. The brake pedal operation amount sensor 62 detects an operation amount of a brake pedal 32 and sends information on the detected operation amount to the ECU 90. The ECU 90 acquires the operation amount of the brake pedal 32 as a brake pedal operation amount BP, based on the information sent from the brake pedal operation amount sensor 62. The ECU 90 acquires a requested braking force by calculation, based on the brake pedal operation amount BP. The requested braking force is a braking force which is requested to be output from the braking apparatus 22. The ECU 90 controls the activations of the braking apparatus 22 so as to output the braking force which corresponds to the requested braking force from the braking apparatus 22 when the ECU 90 is executing the normal driving process.

### <Steering Angle Sensor>

The steering angle sensor 63 is electrically connected to the ECU 90. The steering angle sensor 63 detects a rotation angle of a steering wheel 33 of the own vehicle 200 with respect to a neutral position of the steering wheel 33 and sends information on the detected rotation angle to the ECU 90. The ECU 90 acquires the rotation angle of the steering wheel 33 of the own vehicle 200 with respect to the neutral position as a steering angle SA, based on the information sent from the steering angle sensor 63.

### <Steering Torque Sensor>

The steering torque sensor 64 is electrically connected to the ECU 90. The steering torque sensor 64 detects a torque which a driver of the own vehicle 200 inputs to a steering shaft 34 via the steering wheel 33 and sends information on the detected torque to the ECU 90. The ECU 90 acquires the torque which the driver inputs to the steering shaft 34 via the steering wheel 33 as a driver input torque TQ_D, based on the information sent from the steering torque sensor 64.

### <Vehicle Moving Speed Sensor Apparatus>

The vehicle moving speed sensor apparatus 65 is an apparatus which detects a moving speed of the own vehicle 200. The vehicle moving speed sensor apparatus 65 is, for example, vehicle wheel rotation speed sensors which are provided on each wheel of the own vehicle 200. The vehicle moving speed sensor apparatus 65 is electrically connected to the ECU 90. The vehicle moving speed sensor apparatus 65 detects the moving speed of the own vehicle 200 and sends signal which represents information on the detected moving speed amount to the ECU 90. The ECU 90 acquires the moving speed of the collision avoiding assist system 100 as a vehicle moving speed SPD, based on the information represented by the signal sent from the vehicle moving speed sensor apparatus 65.

The ECU 90 acquires a torque to be applied to the steering shaft 34 from the steering apparatus 23 as an assist steering torque TQ_A by calculation, based on the driver input torque TQ_D and the vehicle moving speed SPD. The assist steering torque TQ_A is a torque which is applied to the steering shaft 34 to assist a steering operation to the steering wheel 33 carried out by the driver. The ECU 90 controls the activations of the steering apparatus 23 so as to output the torque which corresponds to the assist steering torque TQ_A from the steering apparatus 23.

### <GPS Device>

The GPS device 66 is a device which receives GPS signals SG_G. The GPS device 66 is electrically connected to the ECU 90. The GPS device 66 receives the GPS signals SG_G and sends the received GPS signals SG_G to the ECU 90. The ECU 90 acquires GSP information IF_G which the GPS signals SG_G represent and acquires a position of the own vehicle 200 (i.e., a coordinate position PO_V) and a speed vector VC_S of the own vehicle 200, based on the GPS information IF_G. The speed vector VC_S of the own vehicle 200 is a parameter which represents the vehicle moving speed SPD of the own vehicle 200 and a moving direction DR of the own vehicle 200. The coordinate position PO_V and the speed vector VC_S of the own vehicle 200 acquired, based on the GPS information IF_G are a position and a speed vector on a common coordinate system for all the vehicles 200, respectively.

### <Receiving/Transmitting Device>

The receiving/transmitting device 67 is electrically connected to the ECU 90. The ECU 90 can transmit various wireless signals to an outside of the own vehicle 200 via the receiving/transmitting device 67. In addition, the ECU 90 can receive various wireless signals via the receiving/transmitting device 67.

### <Surrounding Information Sensor Apparatus>

The surrounding information sensor apparatus 70 is an apparatus which detects information on surroundings of the own vehicle 200. The surrounding information sensor apparatus 70 of this embodiment includes a camera 71 and a radar sensor 72. The surrounding information sensor apparatus 70 may additionally include an ultrasonic wave sensor such as a clearance sonar. The surrounding information sensor apparatus 70 may include a laser radar such as a LiDAR in place of the radar sensor 72. The radar sensor 72 is, for example, a millimeter wave radar.

In this embodiment, one camera 71 is provided on the own vehicle 200 so as to take images of a view ahead of the own vehicle 200. However, some cameras may be provided on the own vehicle 200 so as to take images of views around the own vehicle 200. The camera 71 can take the images of a view in a predetermined angle range around a center line which extends in a longitudinal direction of the own vehicle 200 at a width center of the own vehicle.

In this embodiment, one radar sensor 72 is provided on the own vehicle 200 so as to detect objects ahead of the own vehicle 200. However, some radar sensors may be provided on the own vehicle 200 so as to detect objects around the own vehicle 200. The radar sensor 72 transmits electromagnetic waves in a predetermined angle range around a center line of the own vehicle 200 and receives the electromagnetic waves reflected on the objects in the predetermined angle region as the reflected waves.

The surrounding information sensor apparatus 70 is electrically connected to the ECU 90. The surrounding information sensor apparatus 70 sends a signal which represents in-vehicle sensor information IF_S on the images taken by the camera 71 to the ECU 90 and sends a signal which represents in-vehicle sensor information IF_S on the electromagnetic waves which the radar sensor 72 transmits and the electromagnetic waves (the reflected waves) which the radar sensor 72 receives. The ECU 90 acquires the information on the images taken by the camera 71 as the in-vehicle sensor information IF_S, based on the signal sent from the surrounding information sensor apparatus 70 and acquires the information on the electromagnetic waves which the radar sensor 72 transmits and the electromagnetic waves (the reflected waves) which the radar sensor 72 receives as the in-vehicle sensor information IF_S, based on the signal sent from the surrounding information sensor apparatus 70.

The ECU 90 can detect the objects such as the other vehicles ahead of the collision avoiding assist system 100, based on the acquired in-vehicle sensor information IF_S. In addition, when the ECU 90 detects the other vehicles as the objects, the ECU 90 acquire inter-vehicle distances DS_V and relative speed vectors VC_R, based on the in-vehicle sensor information IF_S. The inter-vehicle distance DS_V is a distance between the other vehicle and the own vehicle 200. The relative speed vector VC_R is a speed vector VC_S of the own vehicle 200 with respect to the other vehicle.

### <Operations of Collision Avoiding Assist System>

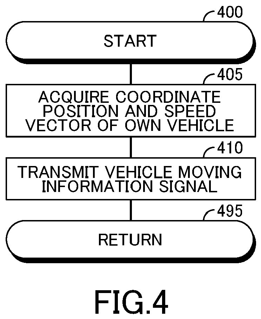

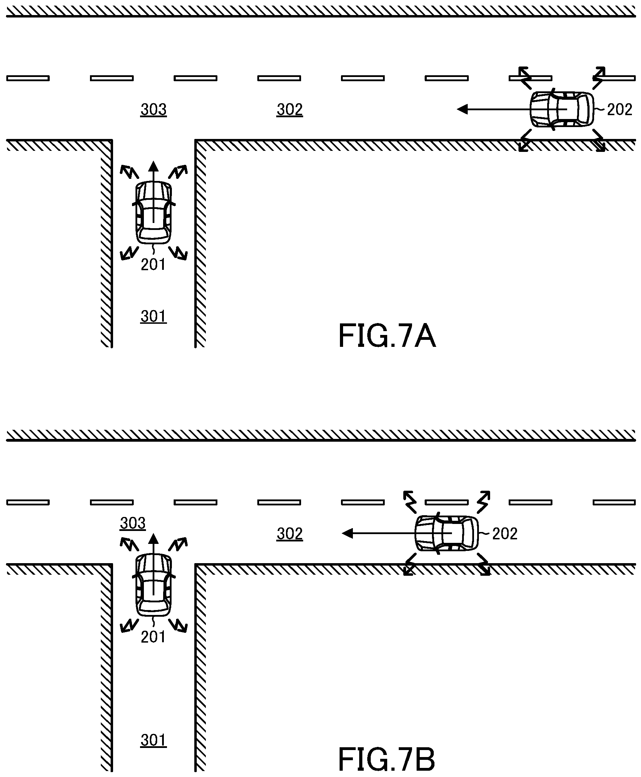

Next, a summary of operations of the collision avoiding assist system 100 will be described. First, the operations of the collision avoiding assist apparatus 10 will be described with reference to FIG. 4 to FIG. 6, and then the summary of the operations of the collision avoiding assist apparatus 10 in a specific situation will be described with reference to FIG. 7.

The collision avoiding assist apparatus 10 has (i) a function of transmitting a vehicle moving information signal SG_Vto the outside, (ii) a function of transmitting a collision information signal SG_C to the outside, and (iii) a function of executing the collision avoiding process.

The vehicle moving information signal SG_V is a signal which represents information on a moving state of the vehicle 200 on which the collision avoiding assist apparatus 10 is installed. The collision information signal SG_C is a signal which represents information on the collision of two vehicles.

The collision avoiding process is a process of avoiding the collision of two vehicles. In this embodiment, the collision avoiding process is any one of a driving force limiting process and a forcibly-braking process. The driving force limiting process is a process of limiting the driving force applied to the vehicle 200 to a value smaller than or equal to a predetermined driving force or reducing the driving force applied to the vehicle 200. The forcibly-braking process is a process of controlling the driving force applied to the vehicle 200 to zero and applying the braking force to the vehicle 200.

### <Transmitting Vehicle Moving Information Signal>

The collision avoiding assist apparatus 10 is executing a routine shown in FIG. 4 with a predetermined calculation cycle. When the collision avoiding assist apparatus 10 starts executing the routine shown in FIG. 4, the collision avoiding assist apparatus 10 acquires the coordinate position PO_V and the speed vector VC_S of the own vehicle 200, based on the GPS information IF_G (at a step 405).

Then, the collision avoiding assist apparatus 10 transmits a vehicle moving information signal SG_V which represents the acquired coordinate position PO_V and the acquired speed vector VC_S of the own vehicle 200 to the outside via the receiving/transmitting device 67 of the own vehicle 200 (at a step 410). In this embodiment, the vehicle moving information signal SG_V includes an identification information which represents a source of the vehicle moving information signal SG_V, i.e., the collision avoiding assist apparatus 10 which transmits the vehicle moving information signal SG_V.

### <Transmitting Collision Information Signal and Executing Collision Avoiding Process>

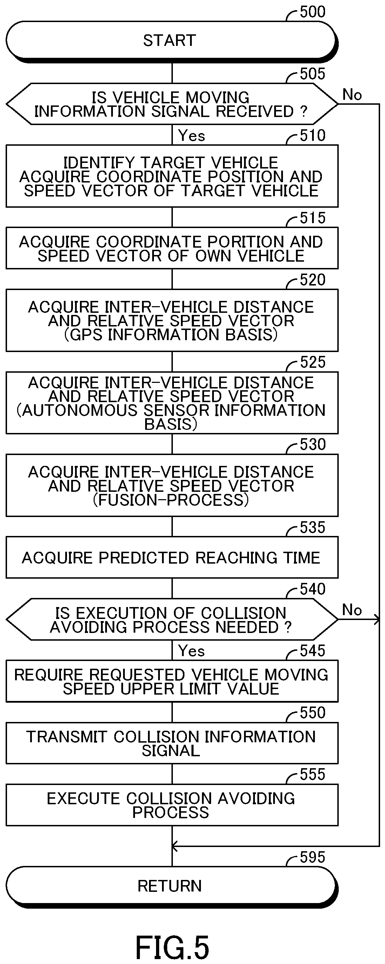

In addition, the collision avoiding assist apparatus 10 is executing a routine shown in FIG. 5 with the predetermined calculation cycle. When the collision avoiding assist apparatus 10 starts executing the routine shown in FIG. 5, the collision avoiding assist apparatus 10 determines whether the collision avoiding assist apparatus 10 receives the vehicle moving information signal SG_V transmitted from the collision avoiding assist apparatus 10 of the other vehicle 220 (at a step 505).

When the collision avoiding assist apparatus 10 does not receive the vehicle moving information signal SG_V transmitted from the collision avoiding assist apparatus 10 of the other vehicle 220 (the collision avoiding assist apparatus 10 determines "No" at the step 505), the collision avoiding assist apparatus 10 terminates executing this routine.

On the other hand, when the collision avoiding assist apparatus 10 receives the vehicle moving information signal SG_V transmitted from the collision avoiding assist apparatus 10 of the other vehicle 220 (i.e., the collision avoiding assist apparatus 10 determines "Yes" at the step 505), the collision avoiding assist apparatus 10 determines the other vehicle 220 as a target vehicle 230 and acquires the coordinate position PO_V and the speed vector VC_S of the target vehicle 230, based on the vehicle moving information IF_V which the received vehicle moving information signal SG_V represents (at a step 510).

Next, the collision avoiding assist apparatus 10 acquires the current coordinate position PO_V and the current speed vector VC_S of the own vehicle 200, based on the GPS information IF_G provided from the GPS device 66 of the own vehicle 200 (at a step 515).

Then, the collision avoiding assist apparatus 10 acquires a distance between the own vehicle 200 and the target vehicle 230 as an inter-vehicle distance DS_V, based on the coordinate position PO_V of the target vehicle 230 and the coordinate position PO_V of the own vehicle 200 (at a step 520). In addition, the collision avoiding assist apparatus 10 acquires the speed vector VC_S of the target vehicle 230 with respect to the own vehicle 200 (i.e., the relative speed vector VC_R of the target vehicle 230), based on the speed vector VC_S of the target vehicle 230 and the speed vector VC_S of the own vehicle 200 (at a step 520).

In addition, the collision avoiding assist apparatus 10 acquires the distance between the own vehicle 200 and the target vehicle 230 as the inter-vehicle distance DS_V and the speed vector VC_S of the target vehicle 230 with respect to the own vehicle 200 as the relative speed vector VC_R, based on the in-vehicle sensor information IF_S provided from the surrounding information sensor apparatus 70 of the own vehicle 200 (at a step 525).

Then, the collision avoiding assist apparatus 10 acquires the inter-vehicle distance DS_V having high accuracy by fusion-processing the inter-vehicle distance DS_V acquired, based on the GPS information IF_G (the inter-vehicle communication information) and the inter-vehicle distance DS_V acquired, based on the in-vehicle sensor information IF_S (at a step 530). In addition, the collision avoiding assist apparatus 10 acquires the relative speed vector VC_R having high accuracy by fusion-processing the relative speed vector VC_R acquired, based on the GPS information IF_G (the inter-vehicle communication information) and the relative speed vector VC_R acquired, based on the in-vehicle sensor information IF_S (at the step 530).

Then, the collision avoiding assist apparatus 10 acquires a predicted reaching time TTC, based on the acquired inter-vehicle distance DS_V and the acquired relative speed vector VC_R (at a step 535). The predicted reaching time TTC is a time predictively taken for the own vehicle 200 and the target vehicle 230 to collide with each other if the own vehicle 200 and the target vehicle 230 move with keeping the current vehicle moving speeds.

The collision avoiding assist apparatus 10 determines whether an execution of the collision avoiding process of avoiding the collision of the own vehicle 200 and the target vehicle 230 is needed, based on the acquired predicted reaching time TTC (at a step 540). In this embodiment, the collision avoiding assist apparatus 10 determines whether the predicted reaching time TTC becomes shorter than or equal to a predetermined predicted reaching time TTCth. When the predicted reaching time TTC becomes shorter than or equal to the predetermined predicted reaching time TTCth, the collision avoiding assist apparatus 10 determines that the execution of the collision avoiding process is needed. On the other hand, when the predicted reaching time TTC is longer than the predetermined predicted reaching time TTCth, the collision avoiding assist apparatus 10 determines that the execution of the collision avoiding process is not needed.

When the collision avoiding assist apparatus 10 determines that the execution of the collision avoiding process is not needed (the collision avoiding assist apparatus 10 determines "No' at the step 540), the collision avoiding assist apparatus 10 terminates executing this routine.

On the other hand, when the collision avoiding assist apparatus 10 determines that the execution of the collision avoiding process is needed (the collision avoiding assist apparatus 10 determines "Yes' at the step 540), the collision avoiding assist apparatus 10 acquires a requested vehicle moving speed upper limit value SPD_M (at a step 545). The requested vehicle moving speed upper limit value SPD_M is an upper limit value of the vehicle moving speed SPD of the target vehicle 230 to be requested the collision avoiding assist apparatus 10 of the target vehicle 230 to avoid the collision of the own vehicle 200 and the target vehicle 230.

Then, the collision avoiding assist apparatus 10 transmits the wireless signal (the collision information signal SG_C) which represents the collision information IF_C representing the acquired requested vehicle moving speed upper limit value SPD_M and the predicted reaching time TTC, to the outside (at a step 550). In this case, the collision information signal SG_C includes the identification information which represents that the collision information signal SG_C is a signal for the target vehicle 230.

In addition, the collision avoiding assist apparatus 10 executes the collision avoiding process suitable to avoid the collision of the own vehicle 200 and the target vehicle 230 (at a step 555).

### <Executing Collision Avoiding Process>

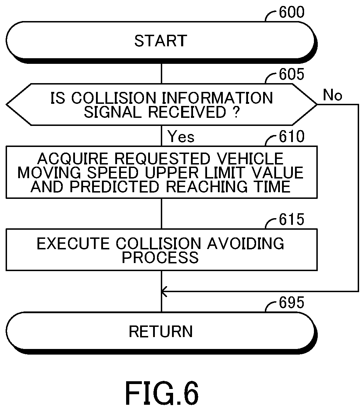

In addition, the collision avoiding assist apparatus 10 is executing a routine shown in FIG. 6 with the predetermined calculation cycle. When the collision avoiding assist apparatus 10 starts executing the routine shown in FIG. 6, the collision avoiding assist apparatus 10 determines whether the collision avoiding assist apparatus 10 receives the collision information signal SG_C including the identification information which represents the collision information signal SG_C is a signal for the own vehicle 200 (at a step 605).

When the collision avoiding assist apparatus 10 does not receive the collision information signal SG_C including the identification information which represents the collision information signal SG_C is a signal for the own vehicle 200 (the collision avoiding assist apparatus 10 determines "No" at the step 605), the collision avoiding assist apparatus 10 terminates executing this routine.

On the other hand, when the collision avoiding assist apparatus 10 receives the collision information signal SG_C including the identification information which represents the collision information signal SG_C is a signal for the own vehicle 200 (the collision avoiding assist apparatus 10 determines "Yes" at the step 605), the collision avoiding assist apparatus 10 acquires the requested vehicle moving speed upper limit value SPD_M and the predicted reaching time TTC, based on the collision information IF_C which the collision information signal SG_C represents (at a step 610).

Then, the collision avoiding assist apparatus 10 executes the collision avoiding process suitable to avoid the collision of the own vehicle 200 and the other vehicle 220 which transmits the collision information signal SG_C, based on the acquired requested vehicle moving speed upper limit value SPD_M and the acquired predicted reaching time TTC (at a step 615).

### <Example>

Next, the operations of the collision avoiding assist apparatus 10 will be described with reference to an example shown in FIG. 7. FIG. 7 shows a situation that (i) a non-priority road 301 and a priority road 302 cross at a place (i.e., a traffic intersection 303), (ii) one vehicle (a first vehicle 201) is moving along the non-priority road 301 toward the traffic intersection 303, and (iii) the other vehicle (a second vehicle 202) is moving along the priority road 302 toward the traffic intersection 303.

The collision avoiding assist apparatus 10 of the first vehicle 201 and the collision avoiding assist apparatus 10 of the second vehicle 202 transmit the vehicle moving information signals SG_V to the outside, respectively.

As shown in FIG. 7A, when the first vehicle 201 and the second vehicle 202 approach the traffic intersection 303, and the first vehicle 201 enters into an inter-vehicle communication area of the second vehicle 202, the collision avoiding assist apparatus 10 of the second vehicle 202 receives the vehicle moving information signal SG_V transmitted from the collision avoiding assist apparatus 10 of the first vehicle 201.

When the collision avoiding assist apparatus 10 of the second vehicle 202 receives the vehicle moving information signal SG_V, the collision avoiding assist apparatus 10 of the second vehicle 202 acquires the inter-vehicle distance DS_V between the first vehicle 201 and the second vehicle 202 and the speed vector VC_S of the first vehicle 201 with respect to the second vehicle 202 (i.e., the relative speed vector VC_R), based on the received vehicle moving information signal SG_V.

As shown in FIG. 7B, when the first vehicle 201 approaches the traffic intersection 303 more, the surrounding information sensor apparatus 70 of the second vehicle 202 begins to detect the information on the first vehicle 201 as the in-vehicle sensor information IF_S.

When the surrounding information sensor apparatus 70 of the second vehicle 202 detects the information on the first vehicle 201 (i.e., the in-vehicle sensor information IF_S), the collision avoiding assist apparatus 10 acquires the inter-vehicle distance DS_V between the first vehicle 201 and the second vehicle 202 and the speed vector VC_S of the first vehicle 201 with respect to the second vehicle 202 (i.e., the relative speed vector VC_R), based on the detected in-vehicle sensor information IF_S.

The collision avoiding assist apparatus 10 of the second vehicle 202 acquires the inter-vehicle distance DS_V having high accuracy by fusion-processing the inter-vehicle distance DS_V acquired, based on the GPS information IF_G (i.e., the inter-vehicle communication information) and the inter-vehicle distance DS_V acquired, based on the in-vehicle sensor information IF_S. In addition, the collision avoiding assist apparatus 10 of the second vehicle 202 acquires the relative speed vector VC_R having high accuracy by fusion-processing the relative speed vector VC_R acquired, based on the GPS information IF_G (i.e., the inter-vehicle communication information) and the relative speed vector VC_R acquired, based on the in-vehicle sensor information IF_S.

Then, the collision avoiding assist apparatus 10 of the second vehicle 202 acquires the predicted reaching time TTC as to the first vehicle 201, based on the acquired inter-vehicle distance DS_V and the acquired relative speed vector VC_R and determines whether the execution of the collision avoiding process is needed, based on the acquired predicted reaching time TTC.

When the collision avoiding assist apparatus 10 of the second vehicle 202 determines the execution of the collision avoiding process is needed, the collision avoiding assist apparatus 10 of the second vehicle 202 acquires the requested vehicle moving speed upper limit value SPD_M as to the first vehicle 201, and transmits the collision information signal SG_C which represents the collision information IF_C on the acquired requested vehicle moving speed upper limit value SPD_M and the acquired predicted reaching time TTC as to the first vehicle 201, to the outside. The collision information signal SG_C includes the identification information which represents that the collision information signal SG_C is a signal for the first vehicle 201. At this time, the collision avoiding assist apparatus 10 of the second vehicle 202 executes the suitable collision avoiding process.

When the collision avoiding assist apparatus 10 of the second vehicle 202 transmits the collision information signal SG_C, the collision avoiding assist apparatus 10 of the first vehicle 201 receives the collision information signal SG_C transmitted from the collision avoiding assist apparatus 10 of the second vehicle 202. As described above, the collision information signal SG_C includes the identification information which represents that the collision information signal SG_C is a signal for the first vehicle 201. Thus, when the collision avoiding assist apparatus 10 of the first vehicle 201 receives the collision information signal SG_C, the collision avoiding assist apparatus 10 of the first vehicle 201 acquires the requested vehicle moving speed upper limit value SPD_M and the predicted reaching time TTC, based on the collision information signal SG_C. Then, the collision avoiding assist apparatus 10 of the first vehicle 201 executes the collision avoiding process suitable to avoid the collision of the first vehicle 201 and the second vehicle 202, based on the acquired requested vehicle moving speed upper limit value SPD_M and the acquired predicted reaching time TTC.

### <Effects>

With the collision avoiding assist system 100, the collision avoiding assist apparatus 10 of one of the vehicle (the own vehicle 200, the second vehicle 202) acquires the position information and the vehicle speed information of the other vehicle (the target vehicle 230, the first vehicle 201), based on the wireless signals transmitted from the collision avoiding assist apparatus 10 of the target vehicle 230. In other words, the collision avoiding assist apparatus 10 of the own vehicle 200 acquires the position information and the vehicle speed information of the target vehicle 230, based on the inter-vehicle communication information provided by the wireless signals from the collision avoiding assist apparatus 10 of the target vehicle 230.

Further, the collision avoiding assist apparatus 10 of the own vehicle 200 acquires the position information and the moving speed information of the target vehicle 230 from the surrounding information sensor apparatus 70 of the own vehicle 200. On other words, the collision avoiding assist apparatus 10 of the own vehicle 200 acquires the position information and the moving speed information of the target vehicle 230, based on in-vehicle sensor information provided from the surrounding information sensor apparatus 70 of the own vehicle 200.

Then, the collision avoiding assist apparatus 10 of the own vehicle 200 determines the collision probability that the own vehicle 200 and the target vehicle 230 are going to collide with each other, based on a combination of the inter-vehicle communication information and the in-vehicle sensor information.

If the known collision avoiding assist apparatus cannot accurately determine a collision probability that the own vehicle moving along the road toward the traffic intersection and the other vehicle moving along the other road toward the traffic intersection are going to collide with each other, a timing that an execution of the collision avoiding process is started in each vehicle, may be too late or too early. If the timing that the execution of the collision avoiding process is started in each vehicle, is too late, the collision of the vehicles may not be avoided. On the other hand, If the timing that the execution of the collision avoiding process is started in each vehicle, is too early, the collision avoiding process may be unnecessarily executed. Thus, in order to avoid an unnecessary execution of the collision avoiding process and avoid the collision of the vehicles, the collision probability should be accurately determined. To this end, information on the position and the moving speed of the own vehicle and the position and the moving speed of the other vehicle should be accurately acquired.

In general, regarding the simultaneity of the information that values represented by the acquired information correspond to the actual values of a point of time when the information is acquired, the simultaneity of the information acquired, based on the in-vehicle sensor information is higher than the simultaneity of the information acquired, based on the inter-vehicle communication information. Thus, the simultaneity of the position information and the moving speed information of the target vehicle acquired, based on the in-vehicle sensor information is higher than the simultaneity of the position information and the moving speed information of the target vehicle acquired, based on the inter-vehicle communication information.

In this regard, when the own vehicle is moving, following the target vehicle in the same direction, the collision avoiding assist apparatus 10 of the own vehicle can accurately acquire the position information and the moving speed information of the target vehicle, based on the in-vehicle sensor information. When the own vehicle and the target vehicle are moving along the different roads toward the traffic intersection, the collision avoiding assist apparatus 10 of the own vehicle cannot accurately acquire the position information and the moving speed information of the target vehicle, based on the in-vehicle sensor information. Thus, acquiring the position information and the moving speed information of the target vehicle, based on the in-vehicle sensor information, has advantage of high simultaneity of the acquired position information and the acquired moving speed information, but has disadvantage of low accuracy of the acquired position information and the acquired moving speed information.

On the other hand, the inter-vehicle communication information is information which is transmitted from the collision avoiding assist apparatus 10 of the target vehicle. Thus, the accuracy of the position information and the moving speed information of the target vehicle acquired, based on the inter-vehicle communication information, is high. However, as described above, the simultaneity of the position information and the moving speed information of the target vehicle acquired, based on the inter-vehicle communication information, is low. Thus, acquiring the position information and the moving speed information of the target vehicle, based on the inter-vehicle communication information, has advantage of high accuracy of the acquired position information and the acquired moving speed information, but has disadvantage of low simultaneity of the acquired position information and the acquired moving speed information.

Further, when the own vehicle is moving, following the target vehicle in the same direction, the collision avoiding assist apparatus of the own vehicle can constantly acquire the in-vehicle sensor information on the target vehicle. However, when two vehicles are moving along the different roads toward the traffic intersection, the collision avoiding assist apparatus of the own vehicle may not acquire the in-vehicle sensor information due to a fact that the target vehicle in a blind area of the own vehicle. Acquiring the position information and the moving speed information of the target vehicle, based on the in-vehicle sensor information, also has such disadvantage.

On the other hand, even when the target vehicle is in the blind area of the own vehicle, and thus the collision avoiding assist apparatus of the own vehicle cannot acquire the in-vehicle sensor information on the target vehicle, the collision avoiding assist apparatus of the own vehicle can acquire the position information and the moving speed information of the target vehicle, based on the inter-vehicle communication information.

With the collision avoiding assist system 100, the collision avoiding assist apparatus 10 of the vehicle 200 determines the collision probability that the vehicle 200 and the target vehicle 230 are going to collide with each other, based on a combination of the inter-vehicle communication information and the in-vehicle sensor information. Thus, the disadvantage as to acquiring the position information and the moving speed information of the target vehicle 230, based on the inter-vehicle communication information and the disadvantage as to acquiring the position information and the moving speed information of the target vehicle 230, based on the in-vehicle sensor information complement each other. As a result, the collision probability can be accurately determined. Thus, the unnecessary execution of the collision avoiding process and the collision of the vehicles can be avoided in a situation that the vehicles are moving along the different roads toward the traffic intersection.

In a situation that the own vehicle and the target vehicle are moving along the different roads toward the traffic intersection, if a detecting angle range of the surrounding information sensor apparatus of each vehicle is limited to an angle range ahead of each vehicle or the target vehicle is in the blind area of the own vehicle due to buildings near the traffic intersection, but the moving speeds of the vehicles are generally the same, the surrounding information sensor apparatuses of the vehicles start detecting each other. Thus, when the vehicles are going to collide with each other, the executions of the collision avoiding process are generally simultaneously started for the vehicles. Thus, the collision of the vehicle is avoided.

However, in a situation that (i) there is the traffic intersection at which the priority road and the non-priority road cross, (ii) one of the vehicles is moving along the priority road toward the traffic intersection, and (iii) the other vehicle is moving along the non-priority road toward the traffic intersection, the moving speed of the vehicle moving along the non-priority road is lower than the moving speed of the vehicle moving along the priority road. Thus, there is a situation that the moving speed of one of the vehicles is lower than the moving speed of the other vehicle. In such a situation, the surrounding information sensor apparatus of the vehicle having a higher moving speed (i.e., a high moving speed vehicle) detects the other vehicle (i.e., a low moving speed vehicle) before the surrounding information sensor apparatus of the low moving speed vehicle detects the high moving speed vehicle. Then, if the high and low moving speed vehicles are going to collide with each other, the collision avoiding assist apparatus of the high moving speed vehicle starts executing the collision avoiding process. On the other hand, the surrounding information sensor apparatus of the low moving speed vehicle does not detect the high moving speed vehicle. Thus, the collision avoiding assist apparatus of the low moving speed vehicle cannot determine the collision probability. Thus, even when the low moving speed vehicle is going to collide with the high moving speed vehicle, the collision avoiding assist apparatus of the low moving speed vehicle does not start executing the collision avoiding process. Thus, if a point where the surrounding information sensor apparatus of the high moving speed vehicle starts to detect the low moving speed vehicle, is near a point where the vehicles are going to collide with each other, only the execution of the collision avoiding process by the collision avoiding assist apparatus of the high moving speed vehicle may not avoid the collision of the high moving speed vehicle with the low moving speed vehicle.

In this regard, with the collision avoiding assist system 100, when the collision avoiding assist apparatus 10 of the high moving speed vehicle (the second vehicle 202) starts executing the collision avoiding process to avoid the collision of the high moving speed vehicle (the second vehicle 202) with the low moving speed vehicle (the first vehicle 201), the collision avoiding assist apparatus 10 of the high moving speed vehicle transmits the collision information IF_C on the collision of the high moving speed vehicle and the low moving speed vehicle to the collision avoiding assist apparatus 10 of the low moving speed vehicle. Then, the collision avoiding assist apparatus 10 of the low moving speed vehicle starts executing the collision avoiding process for the low moving speed vehicle, based on the collision information transmitted IF_C from the collision avoiding assist apparatus 10 of the high moving speed vehicle. Thus, the collision of the high moving speed vehicle and the low moving speed vehicle can be surely avoided.

It should be noted that the invention is not limited to the aforementioned embodiments, and various modifications can be employed within the scope of the invention.

## Claims

1. A collision avoiding assist system (100) of avoiding a collision of a first vehicle (201) and a second vehicle (202), the collision avoiding assist system (100) including:
a first collision avoiding assist apparatus (10) which is installed on the first vehicle (201) and transmits wireless signals to an outside of the first vehicle (201); and
a second collision avoiding assist apparatus (10) which is installed on the second vehicle (202) and receives the wireless signals transmitted from the first collision avoiding assist apparatus (10) to the outside and transmits wireless signals to an outside of the second vehicle (202);
wherein:
the first collision avoiding assist apparatus (10) is configured to transmit a first wireless signal to the outside of the first vehicle (201);
the first wireless signal being a signal which represents (i) position information on a position of the first vehicle (201), (ii) moving speed information on a moving speed of the first vehicle (201), and (iii) identification information representing that the first wireless signal is a signal transmitted from the first collision avoiding assist apparatus (10);
the second collision avoiding assist apparatus (10) is configured to:
acquire the position information of the first vehicle (201) and the moving speed information of the first vehicle (201), based on the first wireless signal which the second collision avoiding assist apparatus (10) receives;
transmit a second wireless signal when the second collision avoiding assist apparatus (10) determines that the first vehicle (201) and the second vehicle (202) are going to collide with each other, based on (i) the acquired position information of the first vehicle (201), (ii) the acquired moving speed information of the first vehicle (201), (iii) position information on the position of the first vehicle (201) which the second collision avoiding assist apparatus (10) acquires by a surrounding information sensor apparatus (70) installed on the second vehicle (202), and (iv) moving speed information on the moving speed of the first vehicle (201) which the second collision avoiding assist apparatus (10) acquires by the surrounding information sensor apparatus (70) installed on the second vehicle (202);
the second wireless signal being a signal which represents (i) collision information representing that the first vehicle (201) and the second vehicle (202) are going to collide with each other and (ii) identification information representing that the second wireless signal is a signal transmitted to the first vehicle (201); and
the first collision avoiding assist apparatus (10) is configured to execute a collision avoiding process for the first vehicle (201) to avoid the collision of the first vehicle (201) and the second vehicle (202) when the first collision avoiding assist apparatus (10) receives the second wireless signal.

2. The collision avoiding assist system (100) as set forth in claim 1, wherein the second collision avoiding assist apparatus (10) is configured to execute a collision avoiding process for the second vehicle (202) to avoid the collision of the first vehicle (201) and the second vehicle (202) when the second collision avoiding assist apparatus (10) determines that the first vehicle (201) and the second vehicle (202) are going to collide with each other.

3. The collision avoiding assist system (100) as set forth in claim 1 or 2, wherein the position information is information acquired, based on a GPS signal.

4. The collision avoiding assist system (100) as set forth in claim 1 or 2, wherein the moving speed information is information acquired, based on a GPS signal.

5. The collision avoiding assist system (100) as set forth in any one of claims 1 to 4, wherein the moving speed information is a relative speed vector between the first vehicle (201) and the second vehicle (202).

6. The collision avoiding assist system (100) as set forth in any one of claims 1 to 5, wherein the surrounding information sensor apparatus (70) is installed on the second vehicle (202) so as to detect the position and the moving speed of the first vehicle (201) in a predetermined angle area ahead of the second vehicle (202).

7. The first collision avoiding assist apparatus (10) included in the collision avoiding assist system (100) as set forth in any one of claims 1 to 6.

8. The second collision avoiding assist apparatus (10) included in the collision avoiding assist system (100) as set forth in any one of claims 1 to 6.
